# EUROPÄISCHE PATENTANMELDUNG

(11) **EP 4 089 793 A1**
(43) Veröffentlichungstag der Anmeldung: **16.11.2022**
(21) Anmeldenummer: 22166265.3
(22) Anmeldetag: 01.04.2022
(51) Int. Cl.: H01M 10/54, B26D 1/157, B26D 1/00, B26D 1/16

(54) **VERFAHREN ZUR DEMONTAGE EINES BATTERIEGEHÄUSES EINES HOCHVOLT-BATTERIESYSTEMS**

(30) Priorität: 10.05.2021 DE 102021204685
(71) Anmelder: VOLKSWAGEN AG, 38440 Wolfsburg (DE)
(72) Erfinder: Schulze, Malte, 38518 Gifhorn (DE); Storm, Ernst, 29399 Wahrenholz (DE); Greppler, Frank, 38300 Wolfenbüttel (DE)

(57) **Zusammenfassung**

Die Erfindung betrifft ein Verfahren zur Demontage eines Batteriegehäuses (1) eines Hochvolt-Batteriesystems insbesondere eines Fahrzeugs, bei dem Gehäuseteile (3, 5) des Batteriegehäuses (1) an Fügeflanschen (7) miteinander in Stoffschlussverbindung sind, wobei zur Demontage des Batteriegehäuses (1) ein Demontagewerkzeug (11) in einen Fügespalt (27) zwischen den Fügeflanschen (7) eingeführt wird, um die Stoffschlussverbindung zu lösen. Erfindungsgemäß ist das Demontagewerkzeug (11) ein Rollenschneider.

## Beschreibung

Die Erfindung betrifft ein Verfahren zur Demontage eines Batteriegehäuses eines Hochvolt-Batteriesystems nach dem Oberbegriff des Anspruches 1, ein Demontagewerkzeug nach Anspruch 9 sowie eine Verwendung des Demontagewerkzeugs zur Demontage eines Batteriegehäuses nach Anspruch 10.

Das Batteriegehäuse eines Hochvolt-Batteriesystems kann aus zwei Gehäusehälften aufgebaut sein, nämlich einem Gehäuse-Unterteil (das heißt Batterietrog) und einem Gehäuse-Deckel. Die beiden Gehäusehälften müssen nach dem Einbau sämtlicher Batterie-Komponenten (das heißt Module, Kabelstränge, Leistungselektronik) so miteinander verbunden werden, dass die Dichtigkeit und damit die Sicherheit über die Lebensdauer des Batteriesystem sichergestellt ist. Hierzu können die Gehäusehälften miteinander verklebt werden.

In einem gattungsgemäßen Verfahren zur Demontage eines Batteriegehäuses wird ein Demontagewerkzeug in einen Fügespalt zwischen den miteinander verklebten Fügeflanschen von Batteriegehäuseteilen eingeführt, um die Klebverbindung zu lösen.

Das technische Problem besteht darin, die miteinander verklebten Gehäusehälften in möglichst geringer Prozessdauer sowie mit betriebssicherer Wiederholbarkeit in einem automatisierten Prozess zu öffnen. Im Stand der Technik wird die Klebverbindung zumeist manuell mit einer oszillierenden Säge aufgeschnitten. Hierbei ist darauf zu achten, dass die Sägezähne nicht abbrechen oder eine zu hohe Temperatur durch Reibung eingebracht wird, so dass die Gehäuseteile nach erfolgtem Schneidprozess wieder verkleben.

Ein solcher Schneidprozess ist mit hohem Kraftaufwand von Seiten der Werker sowie fertigungstechnisch aufwendig mittels Brechwerkzeugen durchführbar. Es hat sich gezeigt, dass ein Schneidprozess mit oszillierender Säge nicht auf einen vollautomatisierten Serienprozess zur Demontage des Batteriegehäuses übertragbar ist. Zudem ist im Stand der Technik der Personalaufwand zur Demontage des Batteriegehäuses vergleichsweise groß. Bei einer geringfügigen Fehlbelastung der Sägen kann es zum Abbrechen von Säge-Zähnen (des Sägeblattes) kommen. Zudem kann es bei zu großer Wärmeeinwirkung während des Schneidprozesses zu einem Wiederverkleben der Batteriegehäuseteile kommen.

Aus der DE 10 2018 211 637 A1 ist eine Vorrichtung zum Öffnen einer prismatischen Batteriezelle bekannt. Aus der DE 10 2016 107 372 A1 ist ein Gehäuse zur Aufnahme von Hochvoltkomponenten bekannt.

Die Aufgabe der Erfindung besteht darin, ein Verfahren zur Demontage eines Batteriegehäuses eines Hochvolt-Batteriesystems bereitzustellen, das im Vergleich zum Stand der Technik fertigungstechnisch einfach sowie betriebssicher durchführbar ist.

Die Aufgabe ist durch die Merkmale des Anspruches 1, 9 und 10 gelöst. Bevorzugte Weiterbildungen der Erfindung sind in den Unteransprüchen offenbart.

Die Erfindung geht von einem Verfahren zur Demontage eines Batteriegehäuses eines Hochvolt-Batteriesystem aus, bei dem Gehäuseteile des Batteriegehäuses an Fügeflanschen miteinander mindestens in Stoffschlussverbindung sind (manchmal zusätzlich noch verschraubt). Zur Demontage des Batteriegehäuses wird ein Demontagewerkzeug in einen Fügespalt zwischen den Fügeflanschen eingeführt, um die Stoffschlussverbindung zu lösen. Gemäß dem kennzeichnenden Teil des Anspruches 1 ist das Demontagewerkzeug als ein Rollenschneider realisiert. Dieser wird beim Demontageprozess unter Auftrennung der Stoffschlussverbindung in einer Zustellbewegung in Fügeflansch-Querrichtung über eine Eindringtiefe in den Fügespalt eingeführt und in einer Vorschubbewegung entlang der Flanschverbindung in Fügeflansch-Längsrichtung abgerollt.

Die Stoffschlussverbindung kann speziell eine Klebverbindung sein, bei der die beiden Fügeflansche mit zwischengeordneter Klebschicht miteinander verklebt sind.

Ein Kerngedanke der Erfindung besteht darin, dass ein Öffnen des Batteriegehäuses als ein mehrstufiges Verfahren aus Schneiden, Beschädigen und Aufdrücken der beiden Gehäuseteile realisiert ist. In dem Verfahren kann das Demontagewerkzeug in die Klebenaht eingefahren werden, wodurch diese beschädigt wird. Anschließend baut sich durch das weitere Einfahren des Demontagewerkzeugs eine zusätzliche mechanische Trennkraft (nachfolgend als Aufhebel-Kraft bezeichnet) auf, die über das Demontagewerkzeug in die beiden Gehäuseteile eingeleitet wird. Die eingeleitete Aufhebel-Kraft drückt die beiden Gehäuseteile auseinander.

Das Demontagewerkzeug, das heißt der Rollenschneider, kann bevorzugt zwei Konstruktionsbereiche aufweisen, nämlich einen ersten Konstruktionsbereich, der sehr flach sowie scharf wie eine Klinge ausgeführt ist, um die Verklebung beim Eindringen zu beschädigen. Im zweiten Konstruktionsbereich steigt die Werkzeug-Dicke an, um die Gehäusehälften durch das tiefere Eindringen des Werkzeugs aufzudrücken. Die kombinierte Anwendung beider Konstruktionsbereiche des Rollenschneiders bewirkt das Öffnen des Batteriegehäuses.

Durch Anwendung des Rollenschneiders ist der Demontagevorgang mittels Roboterunterstützung im Hinblick auf eine großindustrielle Anwendung ohne weiteres automatisierbar, die speziell mit dem Rücklauf hoher Stückzahlen an Altbatterien an wirtschaftlicher Bedeutung gewinnt.

Erfindungsgemäß wird somit auf eine Beschädigung der Klebverbindung mit Hilfe einer oszillierenden Säge sowie auf ein als separater Prozessschritt durchgeführtes Aufhebeln des Gehäuses verzichtet. Vielmehr besteht der Kern der Erfindung in der Kombination einer auf die Klebenaht beschädigend wirkenden Schneidkraft sowie einer Aufhebel-Kraft zum Öffnen der Gehäusehälften.

Beispielhaft kann das Werkzeug an einem Roboterarm befestigt sein und in die Klebenaht zwischen den beiden Gehäuseteilen automatisiert eingeführt werden. Danach fährt der Roboterarm die Batterie-Kontur, der Klebenaht folgend, ab. Über die Verstellung der Eindringtiefe in die Klebenaht kann die Intensität des Aufdrückens der beiden Gehäuseteile variiert und gesteuert werden.

Generell kann der Rollenschneider einen motorisch betriebenen, elektrischen Drehantrieb aufweisen, so dass der Schneidvorgang als Fräsprozess realisiert ist. In diesem Fall fährt der Roboter die Batterie-Kontur ab und trennt dabei die Gehäuseteile durch fräsende Bearbeitung.

Bei einem solchen Fräsprozess kann allerdings aufgrund der Wärmeeinbringung nur ein reduzierter Vorschub und damit nur eine geringe Gesamtprozessgeschwindigkeit realisiert werden. Zudem ist der Fräsprozess mit einer Spanbildung verbunden. Die Frässpäne können in das Gehäuseinnere eindringen und dort gegebenenfalls Kurzschlüsse verursachen. Zudem ist bei Anwendung einer solchen Fräsbearbeitung nicht mehr exakt nachvollziehbar, welche Fremdkörper durch den Fräsprozess und welche Fremdkörper über die Batterie-Lebensdauer in das Gehäuseinnere eingedrungen sind, wodurch die Anwendbarkeit des Fräsprozesses eingeschränkt bzw. eine nachträgliche Analyse aufgefundener Fremdkörper nicht mehr möglich ist. Zusätzlich verbleibt nach dem Fräsprozess an einem Gehäuseteil meist ein Rückstand des anderen Gehäuseteils. Von daher ist keine sortenreine Trennung der Materialien möglich, was im Hinblick auf eine sortenreine Abfall- bzw. Werkstofftrennung nachteilig ist.

Vor diesem Hintergrund ist es bevorzugt, wenn der Rollenschneider frei drehbeweglich um eine Rotationsachse gelagert ist. In diesem Fall erfolgt der Drehantrieb des Rollenschneiders passiv, das heißt als Folge der Vorschubbewegung ohne zusätzliche elektrische Fremdenergie.

Nachfolgend sind Erfindungsaspekte nochmals im Einzelnen hervorgehoben: So kann sich die Stoffschlussverbindung zwischen den Fügeflanschen in der Fügeflansch-Querrichtung über eine Flanschbreite erstrecken. Bevorzugt kann die Eindringtiefe des Rollenschneiders kleiner bemessen sein als diese Flanschbreite. Dadurch ist die folgende Prozessführung gewährleistet: so verbleibt nach durchgeführtem Rollenschneid-Vorgang über eine Rest-Flanschbreite noch eine Rest-Stoffschlussverbindung zwischen den Fügeflanschen. Im Anschluss an den Rollenschneid-Vorgang kann ein Aufhebel-Vorgang durchgeführt werden, bei dem die beiden Fügeflansche mit einer Aufhebel-Kraft auseinandergedrückt werden, so dass die Rest-Stoffschlussverbindung aufreißt.

Die beiden Fügeflansche können an einer Fügeebene miteinander in Stoffschlussverbindung sein. Im Hinblick auf eine einwandfreie Demontage-Bearbeitung kann die Rotationsachse des Rollenschneiders rechtwinklig zur Fügeebene ausgerichtet sein.

In einer technischen Umsetzung kann die Schneidklingen-Geometrie rotationssymmetrisch zur Rotationsachse sein. Die Schneidklingen-Geometrie kann so realisiert sein, dass sowohl der Rollenschneid-Vorgang als auch der Aufhebel-Vorgang mittels des Rollenschneiders durchgeführt werden. Hierzu kann die Schneidklinge einen, insbesondere rechtwinklig zur Rotationsachse ausgerichteten Schneidklingen-Boden aufweisen. Dieser kann mit einer radial äußeren, umlaufenden Schneidflanke einen flachen Konuswinkel aufspannen. Die radial äußere Schneidflanke kann an einer Übergangskante in eine radial innere, umlaufende Aufhebel-Flanke übergehen. Diese kann mit dem Schneidklingen-Boden einen steilen Konuswinkel aufspannen. In diesem Fall ergibt sich folgende Prozessführung: So kann im Laufe der Zustellbewegung des Rollenschneiders bis Erreichen der Eindringtiefe ein äußerer Teil eines der Fügeflansche in Gleitkontakt mit der radial inneren Aufhebel-Flanke der Schneidklinge kommen. Dadurch baut sich eine Aufhebel-Kraft auf, mittels der die beiden Fügeflansche auseinander gedrückt werden.

Nachfolgend ist ein Ausführungsbeispiel der Erfindung anhand der beigefügten Figuren beschrieben.

Es zeigen:
- Figur 1: in perspektivischer Darstellung einen Rollenschneider,
- Figuren 2 und 3: jeweils Ansichten, anhand derer ein Demontageprozess veranschaulicht ist.

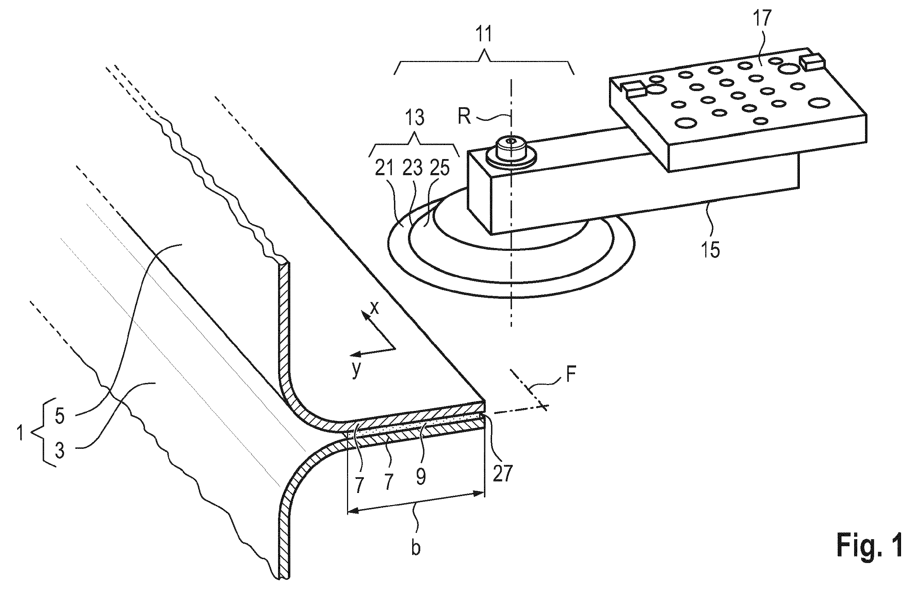

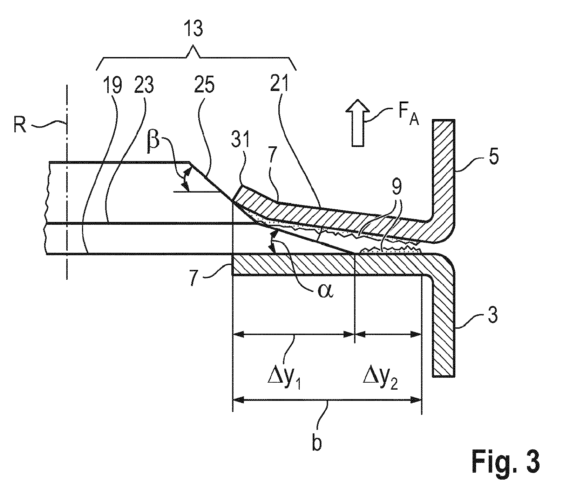

In der Figur 1 ist ein Batteriegehäuse 1 eines Hochvolt-Batteriesystems angedeutet, das aus zwei Gehäusehälften, nämlich einem Batterietrog 3 und einem Batteriedeckel 5, aufgebaut ist. Im Gehäuseinneren sind nicht dargestellte Batteriekomponenten (etwa Batteriemodule, Kabelstränge sowie eine Leistungselektronik) angeordnet. Die beiden Gehäusehälften 3, 5 weisen jeweils nach gehäuseaußen abragende Fügeflansche 7 auf, die miteinander in Klebverbindung sind, bei der die beiden Fügeflansche 7 an einer Fügeebene F mit zwischengeordneter Klebschicht 9 miteinander verklebt sind. Die so gebildete Flanschverbindung verläuft in einer Flansch-Längsrichtung x über den gesamten Batteriegehäuse-Umfang. Die Klebverbindung erstreckt sich in der Figur 1 oder 3 in einer Fügeflansch-Querrichtung y über eine Flanschbreite b.

Die Demontage des Batteriegehäuses 1 kann robotergestützt erfolgen. Hierzu ist in der Figur 1 ein Demontagewerkzeug 11 bereitgestellt. Das Demontagewerkzeug 11 ist als ein Rollenschneider mit einer kreisscheibenförmigen Schneidklinge 13 realisiert. Diese ist um eine Rotationsachse R frei drehbeweglich an einer Lagerkonsole 15 drehgelagert. Die Lagerkonsole 15 kann über eine Basisplatte 17 an einem nicht gezeigten distalen Ende eines Roboterarms montiert werden.

Nachfolgend ist die, zur Rotationsachse R rotationssymmetrische Schneidklingen-Geometrie anhand der Figuren beschrieben: Demnach weist die Schneidklinge 13 einen rechtwinklig zur Rotationsachse R ausgerichteten Schneidklingen-Boden 19 auf. Dieser spannt mit einer radial äußeren, umlaufenden Schneidflanke 21 einen flachen Konuswinkel α (Figur 3) auf. Die radial äußere Schneidflanke 21 geht an einer Übergangskante 23 in eine radial innere, umlaufende Aufhebel-Flanke 25 über, die mit dem Schneidklingen-Boden 19 einen steilen Konuswinkel β (Figur 3) aufspannt.

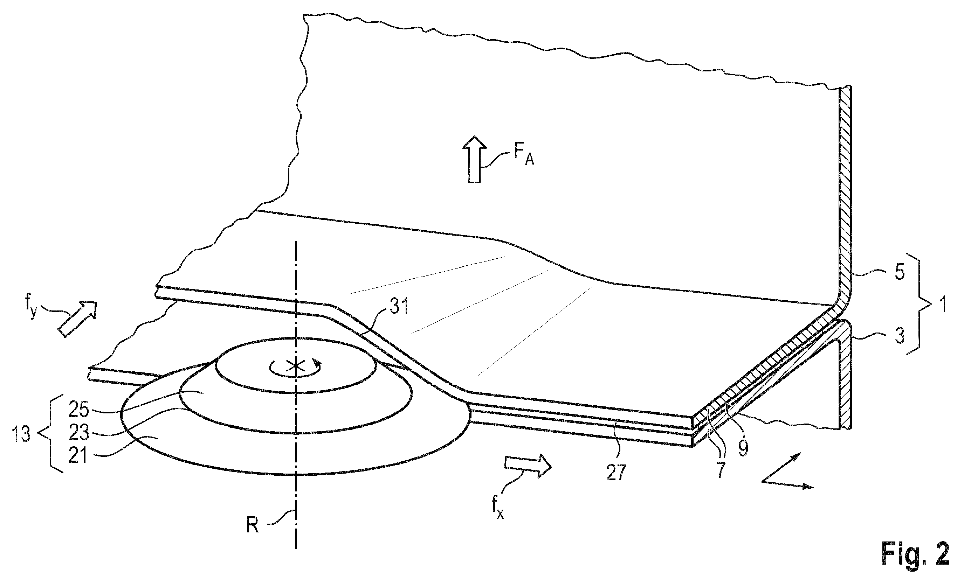

Mittels der oben beschriebenen Schneidklingen-Geometrie ist der nachfolgend anhand der Figuren 2 und 3 veranschaulichte Demontageprozess durchführbar: Zunächst wird die Schneidklinge 13 in einer Zustellbewegung f_{y} in der Fügeflansch-Querrichtung y über eine Eindringtiefe Δy₁ (Figur 3) in einen Fügespalt 27 zwischen den beiden Fügeflanschen 7 eingeführt. Die Eindringtiefe Δy₁ des Rollenschneiders 11 ist in der Figur 3 kleiner bemessen als die Flanschbreite b. Das heißt, dass nach erfolgter Zustellbewegung f_{y} noch eine Rest-Klebverbindung über eine Rest-Flanschbreite Δy₂ zwischen den Fügeflanschen 7 verbleibt.

Zeitlich überlagert zur Zustellbewegung f_{y} bzw. zeitlich der Zustellbewegung f_{y} nachgeschaltet erfolgt eine Vorschubbewegung fₓ des Rollenschneiders 11 entlang der Flanschverbindung in der Fügeflansch-Längsrichtung x. Während der Vorschubbewegung fₓ rollt die kreisscheibenförmige Schneidklinge 13 unter Auftrennung der Klebverbindung in der Fügeflansch-Längsrichtung x passiv ab. Bei der Zustellbewegung f_{y} sowie der Vorschubbewegung fₓ ist der Schneidklingen-Boden 19 in Gleitkontakt auf dem zugewandten, unteren Fügeflansch 7 abgestützt.

Im Laufe der Zustellbewegung f_{y} bis Erreichen der Eindringtiefe Δy₁ kommt der obere Fügeflansch 7 mit seinem Außenrand 31 (Figur 2) in Gleitkontakt mit der Aufhebel-Flanke 25 der Schneidklinge 13, wodurch sich eine Aufhebel-Kraft F_{A} aufbaut, mittels der die beiden Fügeflansche 7 auseinandergedrückt werden.

### Bezugszeichenliste

- 1: Batteriegehäuse
- 3: Batterietrog
- 5: Batteriedeckel
- 7: Fügeflansche
- 9: Klebschicht
- 11: Rollenschneider
- 13: kreisförmige Schneidenklinge
- 15: Lagerkonsole
- 17: Basisplatte
- 19: Schneidklingen-Boden
- 21: radial äußere Schneidenflanke
- 23: Übergangskante
- 25: Aufhebel-Flanke
- 27: Fügespalt
- 31: Fügeflansch-Außenrand
- b: Flanschbreite
- R: Rotationsachse
- α: flacher Konuswinkel
- β: steiler Konuswinkel
- F_{A}: Aufhebel-Kraft
- Δy₁: Eindringtiefe
- Δy₂: Rest-Flanschbreite

## Patentansprüche

1. Verfahren zur Demontage eines Batteriegehäuses (1) eines Hochvolt-Batteriesystems insbesondere eines Fahrzeugs, bei dem Gehäuseteile (3, 5) des Batteriegehäuses (1) an Fügeflanschen (7) miteinander in Stoffschlussverbindung sind, wobei zur Demontage des Batteriegehäuses (1) ein Demontagewerkzeug (11) in einen Fügespalt (27) zwischen den Fügeflanschen (7) eingeführt wird, um die Stoffschlussverbindung zu lösen, **dadurch gekennzeichnet, dass** das Demontagewerkzeug (11) ein Rollenschneider ist, und dass der Rollenschneider (11) insbesondere unter Auftrennung der Stoffschlussverbindung in einer Zustellbewegung (f_{y}) in Fügeflansch-Querrichtung (y) über eine Eindringtiefe (Δy₁) in den Fügespalt (27) eingeführt wird und in einer Vorschubbewegung (fₓ) entlang der Flanschverbindung in Fügeflansch-Längsrichtung (x) abgerollt wird.

2. Verfahren nach Anspruch 1, **dadurch gekennzeichnet, dass** sich die Stoffschlussverbindung zwischen den beiden Fügeflanschen (7) in der Fügeflansch-Querrichtung (y) über eine Flanschbreite (b) erstreckt, und dass die Eindringtiefe (Δy₁) des Rollenschneiders (11) kleiner bemessen ist als die Flanschbreite (b), so dass nach erfolgtem Rollenschneid-Vorgang beziehungsweise nach erfolgter Zustellbewegung (f_{y}) noch eine Rest-Stoffschlussverbindung über eine Rest-Flanschbreite (Δy₂) zwischen den Fügeflanschen (7) verbleibt, und dass insbesondere nach dem Rollenschneid-Vorgang ein Aufhebel-Vorgang erfolgt, bei dem sich eine Aufhebel-Kraft (F_{A}) aufbaut, mittels der die beiden Fügeflansche (7) auseinander gedrückt werden, so dass die noch verbliebene Rest-Stoffschlussverbindung aufreißt.

3. Verfahren nach Anspruch 1 oder 2, **dadurch gekennzeichnet, dass** die beiden Fügeflansche (7) an einer Fügeebene (F) miteinander in Stoffschlussverbindung sind, und/oder dass der Rollenschneider (11) während der Vorschubbewegung (fₓ) um eine Rotationsachse (R) abrollt, die insbesondere rechtwinklig zur Fügeebene (F) ausgerichtet ist.

4. Verfahren nach einem der vorhergehenden Ansprüche, **dadurch gekennzeichnet, dass** dem Rollenschneider (11) kein mit Fremdenergie arbeitender Drehantrieb zugeordnet ist, sondern dass der Rollenschneider (11) ohne eigenem Drehantrieb während der Vorschubbewegung (fₓ) lediglich passiv abrollt.

5. Verfahren nach einem der vorhergehenden Ansprüche, **dadurch gekennzeichnet, dass** die Stoffschlussverbindung eine Klebverbindung ist, bei der die beiden Fügeflansche (7) mit zwischengeordneter Klebschicht (9) miteinander verklebt sind.

6. Verfahren nach einem der vorhergehenden Ansprüche, **dadurch gekennzeichnet, dass** der Rollenschneider (11) eine kreisscheibenförmige Schneidklinge (13) aufweist, die um eine Rotationsachse (R) insbesondere frei drehbeweglich gelagert ist.

7. Verfahren nach Anspruch 6, **dadurch gekennzeichnet, dass** die Schneidklingen-Geometrie mit Bezug auf die Rotationsachse (R) rotationssymmetrisch ist, und/oder dass die Schneidklingen-Geometrie so ausgebildet ist, dass sowohl der Rollenschneid-Vorgang als auch der Aufhebel-Vorgang mittels des Rollenschneiders (11) durchgeführt wird.

8. Verfahren nach Anspruch 7, **dadurch gekennzeichnet, dass** die Schneidklinge (13) einen, insbesondere rechtwinklig zur Rotationsachse (R) ausgerichteten Schneidklingen-Boden (19) aufweist, der im Rollen-Schneidvorgang und/oder im Aufhebel-Vorgang auf einem der Fügeflansche (7) abgestützt ist, und/oder dass der Schneidklingen-Boden (19) mit einer radial äußeren, umlaufenden Schneidflanke (21) einen flachen Konuswinkel (a) aufspannt, und/oder dass insbesondere die radial äußere Schneidflanke (21) an einer umlaufenden Übergangskante (23) in eine radial innere, umlaufende Aufhebel-Flanke (25) übergeht, die mit dem Schneidklingen-Boden (19) einen steilen Konuswinkel (β) aufspannt, so dass insbesondere im Laufe der Zustellbewegung (f_{y}) bzw. der Vorschubbewegung (fₓ) ein äußerer Teil (31) eines der Fügeflansche (7) in Gleitkontakt mit der radial inneren Aufhebel-Flanke (25) kommt, wodurch die beiden Fügeflansche (7) mittels der Aufhebel-Kraft (F_{A}) auseinander gedrückt werden.

9. Demontagewerkzeug für ein Verfahren zur Demontage eines Batteriegehäuses (1) nach einem der vorhergehenden Ansprüche.

10. Verwendung eines Demontagewerkzeugs (11) bei einem Verfahren zur Demontage eines Batteriegehäuses (1) nach einem der Ansprüche 1 bis 8, wobei das Demontagewerkzeug (11) ein Rollenschneider ist.
